(19) Europäisches Patentamt
European Patent Office
Office européen des brevets

(11) Veröffentlichungsnummer: **0 204 091**
**A2**

(12) # EUROPÄISCHE PATENTANMELDUNG

(21) Anmeldenummer: 86104324.8

(22) Anmeldetag: 27.03.86

(51) Int. Cl.⁴: **B 01 D 53/34**

(30) Priorität: 05.04.85 AT 1037/85

(43) Veröffentlichungstag der Anmeldung: 10.12.86 Patentblatt 86/50

(84) Benannte Vertragsstaaten: AT BE CH DE FR GB IT LI LU NL SE

(71) Anmelder: WAAGNER-BIRO AKTIENGESELLSCHAFT
Stadlauer-Strasse 54
A-1221 Wien(AT)

(72) Erfinder: Glasner, Alfred, Dipl.-Ing.
A-8162 Passail 237(AT)

(72) Erfinder: Lindbauer, Ralf, Dr.
Statteggerstrasse 81e
A-8045 Graz(AT)

(74) Vertreter: Wallner, Gerhard, Dipl.-Ing.
Waagner-Biro Aktiengesellschaft Patentreferat Postfach 11
A-1221 Wien(AT)

(54) **Verfahren zur Reinigung von mit Stäuben und Schadgasen verunreinigten Abgasen.**

(57) Zur Abscheidung von $SO_2$ und $NO_x$ gemeinsam mit den anfallenden Stäuben aus Verbrennungsabgasen eines Dampferzeugers, der mit schwefelhältigem Brennstoff, wie z.B. Braunkohle, befeuert wird, wird vorgeschlagen, den bereits teilweise abgekühlten Abgasen im Temperaturbereich von unter 500°C vor einem Trockenabscheider, wie z.B. Tuchfilter $NH_3$ und/oder $NaHCO_3$ bzw. eine diese Stoffe abgebende bzw. eine mit den Abgasen zu diesem Stoff reagierende Chemikalie zuzuführen. In den Stäuben soll vor der Zuführung von $NH_3$ CaO oder $Ca(OH)_2$ und/oder $Na_2CO_3$, insbesondere aus einer vorgeschalteten Entschwefelungsstufe, enthalten sein.

Fig.1

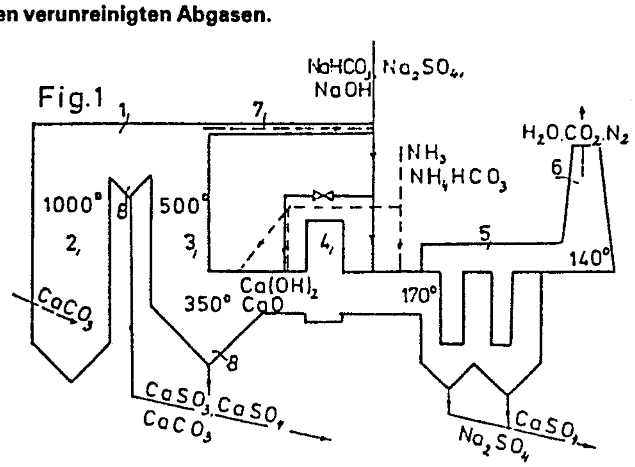


EP 0 204 091 A2

a) Titel der Erfindung

Verfahren zur Reinigung von mit Stäuben und Schadgasen verunreinigten Abgasen

b) Anwendungsgebiet der Erfindung

Im allgemeinen bezieht sich die Erfindung auf ein Verfahren zur Reinigung von mit Stäuben und Schadgasen verunreinigten Abgasen, insbesondere Abgasen aus Verbrennungsanlagen, deren Stäube Alkali- und/oder Erdalkaliverbindungen aus der Brennkammer kommend beinhalten, bzw. deren Stäube bei der Zugabe von Alkali- und/oder Erdalkaliverbindungen, insbesondere eines oder mehrerer der folgenden: $Ca(OH)_2$, $CaCO_3$, $NaHCO_3$, NaOH, CaO bzw. Hydroxide, Oxide, Karbonate, Sulfate, Bikarbonate, nach einer teilweisen Abgasentschwefelung entstanden sind.
Im besonderen betrifft die Erfindung das Gebiet der trockenen Schadgasabsorption und der trockenen Staubabscheidung.

c) Charakteristik der bekannten Lösungen

Es ist bekannt, zur Entschwefelung von Rauchgasen Kalk zu verwenden, diesen in die Brennkammer des Dampfkessels einzublasen

und das entsprechende Reaktionsprodukt abzuscheiden. Bei diesem einstufigen Verfahren wird im allgemeinen ein Entschwefelungsgrad von 50 % erreicht, der für die jetzigen gesetzlichen Grundlagen zu gering ist. Es ist ferner bekannt, eine zweite Sorbenszugabe (z.B. $Ca(OH)_2$, $NaHCO_3$) in den bereits teilweise abgekühlten Abgasen anzuordnen und damit eine weitere Entschwefelung durchzuführen. Auch bei diesem Verfahren ist die Entschwefelung mit etwa 80 % begrenzt, wobei keine Abscheidung von $NO_x$ stattfindet. Für die Abscheidung von $NO_x$ ist eine eigene Einrichtung, oftmals mit Katalysatoren vorgesehen.

d) Ziel der Erfindung

Es ist ein Ziel der Erfindung, die möglichst vollständige Abscheidung der Schadgase zu erreichen, wobei diese Abscheidung mit der Staubabscheidung parallel durchgeführt wird und möglichst wenig zusätzliche Apparate im Rauchgas eingebaut werden müssen. Ein weiteres Ziel der Erfindung ist die gleichzeitige Abscheidung von $SO_2$ und/oder HCl mit $NO_x$ zu erreichen, wobei den oben angeführten Nachteilen begegnet wird.

e) Darlegung des Wesens der Erfindung

Die Erfindung hat es sich zur Aufgabe gestellt, den bekannten Nachteilen entgegenzuwirken. Die Erfindung ist dadurch gekennzeichnet, daß zumindest ein Teilstrom des staubhältigen Abgases im Temperaturbereich von kleiner als $500^{\circ}$ C mit $NH_3$ bzw. $NH_4OH$ oder mit Stoffen, die diese Verbindungen durch thermische Zersetzung abgeben, vorzugsweise in Abhängigkeit der Zugabe von Kalk und/oder Kohle in die Feuerung des Dampferzeugers,

versetzt werden und daß das staubförmige Reaktionsprodukt mit dem restlichen Flugstaub in einem Staubabscheider vom Abgasstrom getrennt wird und daß insbesondere zur Verlängerung der Verweilzeit der Reaktionsprodukte im Abgasstrom und zur Vermeidung der Abscheidung $NH_3$- bzw. $NH_4$-hältiger Verbindungen im Trockenabscheider die Trockenabscheidung der Endprodukte in einem Tuchfilter erfolgt. Weitere wesentliche Erfindungsmerkmale sind in Unteransprüchen 2 bis 12 angegeben, die die Erfindung ergänzen bzw. deren Verwirklichung besonders günstige Abscheidungsgrade ermöglichen und zur zweckmäßigen Lösung der gestellten Aufgabe dienen.

Überraschend wurde festgestellt, daß durch die Erfindung auch die Weiterverarbeitungsfähigkeit des abgeschiedenen Staubes verbessert wurde und daß lösliche Bestandteile wie z.B. Natrium und Ammonsalze für die Rückgewinnung der für die Absorption notwendigen Chemikalien zur Verfügung stehen, wodurch einerseits die Staubmenge reduziert und gleichzeitig homogenisiert wird, wobei etwa nicht ausreagiertes CaO abgebunden wird. Diese Sekundärmaßnahme verbessert das Abfallprodukt sowohl im Hinblick auf die Weiterverwendung in der Bauwirtschaft als auch bei der Verwendung als Deponiegut.

f) Ausführungsbeispiel

Die Erfindung ist in den Figuren 1 und 2 beispielsweise und schematisch dargestellt.
Fig. 1 zeigt das Schaltbild einer Entschwefelungsanlage nach einem Dampferzeuger, und Fig. 2 hiezu eine Variante.
In einem Dampferzeuger 1 eines thermischen Kraftwerkes von 100

MW elektrischer Leistung wird ein schwefelhältiger Brennstoff, wie z.B. Braunkohle, verfeuert, wobei ein Abgas üblicher Zusammensetzung ($CO_2$, $O_2$, $H_2O$, $N_2$) entweicht. In jedem m3 Abgas sind 50g Staub (Flugasche), 4000mg $SO_2$, 450mg $NO_x$ (als NO) im Mittel und gegebenenfalls Cl (als Schadgas) enthalten. Während das Chlor und $SO_2$ brennstoffspezifisch ist, ist das $NO_x$ weitgehend von der Brennkammerauslegung bzw. Brennkammerbelastung abhängig. Die Abscheidung von Chlor und $SO_2$ ist mittels Absorptionsmittels auf Erdalkali- oder Alkalibasis durchführbar, während $NO_x$ reduziert werden muß. Zur Beschleunigung der Reduktion können Katalysatoren verwendet werden. Es ist ein Ziel der Erfindung, das Verfahren ohne zusätzliche Katalysatoren durchzuführen. Durch eine Vorbehandlung der Abgase der Brennkammer, insbesondere durch Kalksteinmehl-Einblasung, oder aber durch Brennstoffwahl und geeignete Brennkammerausgestaltung, ist es möglich, das $SO_2$-$NO_x$-Verhältnis so zu beeinflussen, daß im teilweise abgekühlten Rauchgasstrom im Temperaturbereich von unter 500° C vor dem Staubfilter ein Wert größer als 2 erreicht wird. Als Staubfilter wird ein trockenes E-Filter oder Tuchfilter verwendet. Dem Abgas wird nun vor dem Filter im Temperaturbereich von unter 500° C $Na_2SO_3$ und/oder $NaHCO_3$ sowie $NH_3$ eingeblasen. Bei großem $SO_2$-Gehalt und bei einem $SO_2$-$NO_x$-Verhältniswert von größer als 2 wird $NaHCO_3$ und/oder $Na_2CO_3$ sowie $NH_3$ eingeblasen, wodurch sich das Natriumkarbonat durch $SO_2$-Aufnahme in Natriumsulfit umwandelt. Das Natriumsulfit reduziert das $NO_x$ in $N_2O$, welches von $NH_3$ zu $N_2$ reduziert wird. Dadurch entsteht lösliches Natriumsulfat, $N_2$, Wasserdampf. Das chemische Verfahren wird durch Kristallwasser im Natriumkarbonat und eventuell durch anhaftendes Adhäsionswasser beschleunigt, so daß der Wirkungsgrad der Umsetzung verbessert wird. Sinkt das

$SO_2$-$NO_x$-Verhältnis auf 1, wird dem Natriumkarbonat Natriumsulfit (naß oder trocken) beigemischt, bzw. naß zusätzlich eingedüst, während bei Werten unter 1 nur Natriumsulfit dem $NH_3$ eingeblasen bzw. als Suspension eingedüst wird. Anstelle von $NaHCO_3$ kann auch $Na_2CO_3$ und/oder andere Erdalkali-/Alkalimetallverbindungen wie z.B. CaO, MgO und oder $K_2O$ eingeblasen oder in wässriger Suspension eingedüst werden. Anstelle von bzw. zusätzlich zu $Na_2SO_3$ kann auch $NaHSO_3$ bzw. $CaSO_3$, $K_2SO_3$,$KHSO_3$,-$MgSO_3$ eingeblasen werden. Genauso kann anstelle von $NH_3$ ein $NH_3$-abgebender Stoff wie z.B. $NH_4OH$ oder auch $NH_4HCO_3$ (Hirschhornsalz) verwendet werden. Die Zuführung der einzelnen Stoffe kann auch getrennt oder, zur besseren Dispersion, mehrfach hintereinander erfolgen, wobei allerdings auf die Stöchiometrie zu achten ist. Bei Verwendung von feuchten Stoffen bzw. in Suspension kann dabei schon bei einer Stöchiometrie von 1 ein Abscheidegrad bis zu 80 % erreicht werden.

Die Temperatur in der Brennkammer 2 beträgt rund 1000° C, am Eingang in den zweiten Heizzug 3 500° C, vor dem Luftvorwärmer 4 350° C und im Trockenabscheider 5 170° C. Durch den Kamin 6 entweicht das Abgas mit 140° C.

Die Braunkohle enthält Kalk bzw. es wird Kalk in die Brennkammer 2 zur teilweisen Entschwefelung auf etwa 2000 mg/m3 aufgegeben. Um diese Entschwefelung zu erreichen, muß das CA/S-Verhältnis (Stöchiometrie drei) im Abgasstrom eingehalten werden, wodurch CaO- bzw. $Ca(OH)_2$-Teilchen in den Trockenabscheider 5 mitgenommen werden.

Bei der Durchmessung der nachstehenden Versuche zeigte sich auch eine Abhängigkeit der Schadstoffreinigung durch die mitgeführte Flugasche, insbesondere dann, wenn sie $Al_2O_3$ (Bauxit) enthielt, der meistens in der Kohlenasche enthalten ist. Es

zeigte sich eine Verbesserung, wenn bei Kohlen mit geringem Al-Gehalt durch Bauxit-Zugabe ein geringer Bauxit-Spiegel im Abgas während der Schadstoffreinigung, also im Bereich von unter 500° C, eingehalten wird. In diesem Fall wird dem $NH_3$ abgebendes Mittel oder Speisesoda $Al_2O_3$ in der Größenordnung von 10 % beigemischt.
Zur Erreichung einer Entschwefelung und Entstickung wird dem Rauchgas bei etwa 290° C Speisesoda im Stöchiometrieverhältnis Ca zu $SO_2$ = 1,2 aufgegeben, wodurch Reingaswerte von 400 mg $SO_2$ und 400 mg $NO_x$ erreicht wurden. Das ergibt eine Gesamtentschwefelung von 80 % und eine Gesamtentstickung von 20 %.

<u>Alternativbeispiel 1</u>:
Wird anstelle von Speisesoda eine Mischung von 75 % Speisesoda und 25 % Hirschhornsalz bei einer Stöchiometrie 1 aufgegeben, so werden Reingaswerte von 300 mg $SO_2$ und 150 mg $NO_x$ erreicht.

<u>Alternativbeispiel 2</u>:
Bei einer Mischung von 90 % Speisesoda und 10 % Hirschhornsalz bei einer Stöchiometrie von 0,9 ergeben sich Reingaswerte von
350 mg $SO_2$ und
180 mg $NO_x$.

<u>Alternativbeispiel 3</u>:
Wird anstelle von Hirschhornsalz aus Beispiel 2 $NH_3$-Gas eingebracht und dies direkt ins Filter, insbesondere vor einem Tuchfilter, bei einer Stöchiometrie $NH_3$ zu $SO_2$ = 0,5 eingebracht, so ergibt sich Reingas mit
400 mg $SO_2$ und 400 mg $NO_x$.

Alternativbeispiel 4:

Wird anstelle des $NH_3$-Gases $NH_4OH$ in wässriger Lösung mit gleicher Stöchiometrie wie Beispiel 3 eingebracht, so ergibt sich ein Reingaswert von
400 mg $SO_2$ und 200 mg $NO_x$.

Alternativbeispiel 5:

Wird bei sonst gleichen Werten wie im Beispiel 2 das Mischungsverhältnis zwischen Speisesoda und Hirschhornsalz zu 95 % und 5 % verändert, so ergibt sich bei einer Stöchiometrie von 0,8 Reingaswerte von $SO_2$ 400 mg und $NO_x$ 200 mg.

Alternativbeispiel 6:

Wird dem Abgasstrom reines Hirschhornsalz mit der Stöchiometrie 0,2 aufgegeben, mit 40° C bei einer Filtertemperatur von 140° - 160° C, so ergeben sich Reingaswerte von 400 mg $SO_2$ und $NO_x$ 450 mg.

Alternativbeispiel 7:

Wird gegenüber Beispiel 6 die Stöchiometrie auf 1 erhöht, so verbessern sich die Reingaswerte auf 100 mg $SO_2$ und 400 mg $NO_x$.

Alternativbeispiel 8:

Wird gemäß Beispiel 7 die Aufgabetemperatur auf 340° C und am Filter auf 190° C erhöht, so ergibt sich ein Reingaswert von 600 mg $SO_2$ und 250 mg $NO_x$.

Alternativbeispiel 9:

Wird zu Alternativbeispiel 8 noch ein Elektrofilter mit einer

Vorentstaubung von 85 % vorgeschaltet, so verbessern sich die $NO_x$-Werte auf 150 mg.

Alternativbeispiel 10:
Wird in den Dampfkessel gemäß Beispiel 1 die Kalkzufuhr in der Brennkammer gestrichen und das Speisesoda mit einer Stöchiometrie 1,5 bei 250° C dem Abgas aufgegeben, wobei im nachgeschalteten Tuchfilter eine Temperatur von 190° C nicht überschritten wird, ergeben sich Reingaswerte von 600 mg $SO_2$ und 400 mg $NO_x$.

Alternativbeispiel 11:
Wird anstelle des Speisesodas in Beispiel 10 Hirschhornsalz mit einer Stöchiometrie 1,05 bei 40° C aufgegeben, ergeben sich bei einer Filtertemperatur von 150° C Reingaswerte von 200 mg $SO_2$ und 400 mg $NO_x$.

Alternativbeispiel 12:
Wird im Beispiel 10 eine Mischung von 90 % Speisesoda und 10 % Hirschhornsalz bei einer Stöchiometrie 1 bei einer Abgastemperatur von
300° C verwendet, so ergeben sich Reingaswerte von 300 mg $SO_2$ und 300 mg $NO_x$.

Zur Klärung der an sich widersprüchigen Versuchsergebnisse, ausgedrückt in Alternativbeispielen 1 - 12, wird auf die nachstehenden chemischen Formeln verwiesen:

1. $CaCO_3$ — $CaO + CO_2$
$CaO + SO_2 + 1/2\ O_2$ — $CaSO_4$
$CaO + H_2O$ — $Ca(OH)_2$

2. $2\ NaHCO_3$ — $Na_2CO_3 + CO_2 + H_2O$
$Na_2CO_3 + SO_2$ — $Na_2SO_3 + CO_2$
$Na_2SO_3 + NO$ — $Na_2SO_4 + 1/2\ N_2$

3. $NaSO_3 + NO + NH_3 + 0{,}75\ O_2$ — $Na_2SO_4 + N_2 + 1{,}5\ H_2O$
$NH_4HCO_3$ — $NH_3 + CO_2 + H_2O$
$2\ NH_4HCO_3 + SO_2 + 1/2\ O_2$ (NO alt.) — $(NH_4)_2SO_4 + 2\ CO_2 + H_2O$ (+ $1/2\ N_2$ alt.)
$2\ NH_3 + H_2O + 1/2\ O_2$ (NO alt.)+ $SO_2$ — $(NH_4)_2SO_4$ (+ $1/2\ N_2$ alt.)
$2\ NH_3 + H_2O + SO_2$ — $(NH_4)_2SO_3$
$(NH_4)_2SO_3 + SO_2 + H_2O$ — $2\ NH_4HSO_3$
$NH_4HSO_3 + NH_3$ — $(NH_4)_2SO_3$

4. $Na_2SO_4 + 2\ NH_4HCO_3$ — $2\ NaHCO_3 + (NH_4)_2SO_4$
$Na_2SO_4 + 2\ NH_3 + 2\ CO_2 + 2\ H_2O$ — $2\ NaHCO_3 + (NH_4)_2SO_4$
$Na_2SO_4 + Ca(OH)_2$ — $CaSO_4 + 2\ NaOH$
$NaOH + NH_3 + 2\ CO_2 + H_2O$ — $NaHCO_3 + NH_4HCO_3$
$(NH_4)_2SO_4$ — $NH_4HSO_4 + NH_3$
$(NH_4)_2SO_4 + Ca(OH)_2$ — $CaSO_4 + 2\ NH_3 + 2\ H_2O$
$NH_3 + CO_2 + H_2O$ — $NH_4HCO_3$
$(NH_4)_2SO_4 + Ca(OH)_2 + 2\ CO_2$ — $CaSO_4 + 2\ NH_4HCO_3$
$CaSO_4 + 2\ NH_4HCO_3$ — $CaCO_3 + (NH_4)_2SO_4 + CO_2 + H_2O$
$NH_4HSO_4 + NH_3$ — $(NH_4)_2SO_4$

1. Gruppe ergibt die chemischen Reaktionen im Abgasstrom im Temperaturbereich über 700° C.

2. Gruppe ergibt die chemischen Reaktionen bei der Zugabe von Natriumkarbonat im Temperaturbereich kleiner als 500° C.

3. Gruppe ergibt die chemischen Verbindungen unter der Mitwirkung von $NH_3$ im Temperaturbereich kleiner als 500° C.

4. Gruppe ergibt die Verbindungen im Trockenabscheider zwischen den einzelnen Reaktionsgruppen (Recycling bzw. Reaktivierung der Einsatzstoffe, Kreislaufprodukte, intermediäre Produkte).

Aus diesen Formeln sieht man die katalysatorähnliche Wirkung des $NH_3$, der praktisch unverbraucht, reagiert und wieder freigesetzt wird. Eine ähnliche Wirkung im schwächeren Ausmaß zeigt das Natrium, welches das $SO_2$ bindet und das Sulfation dem Kalziumion zuführt und als Natronlauge oder $NaHCO_3$ mit $NH_3$ wieder in den Kreislauf eintritt. Die auszuscheidenden Verbindungen sind $CaSO_4$ und $CaCO_3$, die praktisch rein von Ammonsalzen anfallen.

Aus den Reaktionsgleichungen sieht man ferner, daß die Entstikkung der Abgase hauptsächlich bei der Umwandlung des Natriumsulfits in das Natriumsulfat vor sich geht. Bei der Durchführung der Formelgruppen 2 und 3 zeigt es sich, daß die Entstikkung der Abgase besonders gut funktioniert, wobei die Formelgruppe 3 allein praktisch keine Entstickung aufweist. Es zeigt sich offensichtlich, daß die Sauerstoffaufnahme in dem Formeln der Gruppe 3 hauptsächlich durch die Reduktion des NO vor sich geht. Es wurden daher NO in Klammer gesetzt.

Wie man ferner aus den Gleichungen der Gruppen 2 und 4 erkennt, ist der Übergang von $NaHCO_3$ zu $Na_2SO_3$ bzw. $Na_2SO_4$ fließend, so daß anstelle der $NaHCO_3$, NaOH oder auch $Na_2SO_3$ bzw. verwendet werden kann. Letzteres ist ein Abfallprodukt in der Zellstoffindustrie und kann zur Bindung der Schadstoffe bzw. zur Reaktivierung des teilweise verbrauchten Kalkes herangezogen werden. Die Natriumverbindungen und das $NH_3$ werden, da sie kaum verbraucht werden, unterstöchiometrisch verwendet und dienen dazu, am nur teilweise verbrauchten Kalkkorn die verbrauchten Schichten zu trennen und unverbrauchte Schichten durch NaOH und $NH_4OH$ in molekularen Größen für die $SO_2$-Aufnahme vorzubereiten.

Das $NaHCO_3$ kann dabei durch Aufbrennen im Temperaturbereich von 330 - 250° C besonders aktiviert werden, indem für die Einblasung im Temperaturbereich um 300° C als Trägergasstrom ein Teilstrom 7 ca. 1 - 2 % des etwa 500° C heißen Abgasstromes am Eintritt in den zweiten Heizzug 3 verwendet wird.

Zur Entlastung des Trockenabscheiders 5, der als Tuchfilter eine Art Reaktionsapparat bildet, sind im Dampferzeuger 1 mehrere Abscheidestellen 8 für Flugasche vorgesehen. In diesem Sinn ist es auch von Vorteil, die Zugabe von $NaHCO_3$, insbesondere in der aufgebrannten Form, nach dem Luftvorwärmer 4 vorzusehen, damit die Heizflächen weniger mit Staub belastet werden. In Fig. 2 ist eine Schaltungsvariante zu Fig. 1 dargestellt, bei der am Austritt des Dampferzeugers 1, insbesondere vor dem Beginn des zweiten Heizzuges 3, eine Heißgasreinigungseinrichtung 9 vorgesehen ist, die auf zweiten Arten im Sinne der Erfindung wirkt.

a) Die Heißgasreinigungseinrichtung 9 arbeitet mit einem Wirkungsgrad von über 90 %, das heißt der CaO bzw. $Ca(OH)_2$-Durchschlag ist unterbunden und das notwendige $Ca(OH)_2$ und gegebenenfalls $Al_2O_3$ wird nach dem Abscheider wieder eingebracht. Dies bewirkt, daß im Trockenabscheider 5 praktisch reines $CaSO_4$ bzw. $Na_2SO_4$ anfällt, dessen Gewinnung dadurch erleichtert wird.

b) Die Heißgasreinigungsanlage 9 arbeitet mit einem Wirkungsgrad von unter 90 %, das heißt, die notwendige $Ca(OH)_2$-Menge schlägt durch das Filter durch, wodurch die Anlage etwa wie Fig. 1 betrieben wird, und es werden nur Regelungen an frischem $Ca(OH)_2$ und eventuell $Al_2O_3$ eingebracht, um den Schadgasspiegel im Abgas konstant zu halten, wodurch der Anfall an ausgefilterten Stäuben minimiert wird.

Zur Verringerung der benötigten Chemikalien empfiehlt es sich, den im Trockenabscheider 5 anfallenden Staub auszulaugen und die flüssige Phase nach einer Karbonatisierung auszukristallisieren, wobei neben Mutterlauge auch die benötigten Kreislaufchemikalien anfallen, die etwa 70 bis 90 % der für die Absorption notwendigen Menge ausmachen. Die besten Rückgewinnungsergebnisse sind bei einem $SO_2$-$NO_x$-Verhältnis im Abgas bei größer als 2 zu finden, da in diesem Fall der $Na_2SO_3$-Bedarf am geringsten ist und die Rückgewinnungsanlage hauptsächlich ein Gemisch aus Hirschhornsalz und Speisesoda liefert.

Die wesentlichen chemischen Reaktionen im Abgasstrom sind:

$NaHSO_3 + 2NO \longrightarrow NaHSO_4 + N_2O$

$Na_2SO_3 + 2NO \longrightarrow Na_2SO_4 + N_2O$ bzw.

$CaSO_3 + 2NO \longrightarrow CaSO_4 + N_2O$

und anstelle von $N_2O + NO \longrightarrow N_2 + NO_2$ (in Abwesenheit von $NH_3$)

ergibt sich

$2NH_3 + 3N_2O \longrightarrow 3H_2O + 4N_2$

wobei $Na_2SO_3$ bzw. $CaSO_3$ zugeführt oder aus

$2NaOH + SO_2 \longrightarrow Na_2SO_3 + H_2O$

$NaHCO_3 + SO_2 \longrightarrow NaHSO_3 + CO_2$

$Na_2CO_3 + SO_2 \longrightarrow Na_2SO_3 + CO_2$

bzw.

$CaO + SO_2 \longrightarrow CaSO_3$

im Abgasstrom erzeugt wird.

$NH_3$ kann ebenfalls aus $NH_4OH \longrightarrow NH_3 + H_2O$
oder aus $NH_4HCO_3 \longrightarrow NH_3 + H_2O + CO_2$
erzeugt werden.

Auf die Reinheit der Chemikalien wird kein besonderer Wert gelegt; so sind größere Verunreinigungen mit höheren Karbonaten,

Bikarbonaten etc., und Sulfiten, Bisulfiten etc., bzw. deren Vermischung mit Kalium oder Kalziumsulfiten nicht störend, so daß Chemikalien aus Recycling-Anlagen verwendbar sind, solange keine Zusatzgifte (Schwermetalle) eingebracht werden.

Bei der Einbringung von Suspensionen, Lösungen mit den Sorbentien in den Abgasstrom, ist darauf zu achten, daß die Flüssigkeit bis zum Eintritt in das Trockenfilter verdampft ist, damit es im Filter zu keinen Verkrustungen kommt und der Staub staubförmig abgeschieden werden kann. Da Temperatur und Menge des Rauchgases an der Eindüsungsstelle und ihre Entfernung vom Trockenfilter (Verweilzeit der Tropfen im Abgasstrom) bekannt ist, ist dadurch auch die maximal einzudüsende Flüssigkeitsmenge vorgegeben.

Die Erfindung ermöglicht somit die Entschwefelung und Entstikkung der Abgase in einem an und für sich vorhandenen Anlageteil und vermeidet die zusätzlichen, sehr raumaufwendigen Entschwefelungs- und Entstickungsanlagen. Es ist vielmehr ein Kennzeichen der Erfindung, daß die Entschwefelung, Entstickung und Entstaubung in einem Anlageteil erfolgt.

Im Rahmen der Erfindung ist es möglich, anstelle des Trockenabscheiders 5 auch einen Naßabscheider vorzusehen, was insbesondere dann sinnvoll erscheint, wenn die Abgase zur Gewinnung des $CO_2$, z.B. in einer Rauchgasneutralisationsanlage, und/oder des Stickstoffes im abgekühlten Zustand verwendet werden.

Die mit der Anmeldung bzw. im Laufe des Verfahrens eingereichten Patentansprüche sind Formulierungsbeispiele bzw. Formulierungsversuche ohne Präjudiz für die Erzielung weitergehenden Patentschutzes.

Der Anmelder behält sich vor, noch weitere, bisher nur in der Beschreibung offenbarte Merkmale von erfindungswesentlicher

Bedeutung zu beanspruchen; insbesondere beabsichtigt der Anmelder, auf in den Unterlagen etwa offenbarte neue Stoffe bzw. chemische Verbindungen Stoffansprüche zu richten.
Im Rahmen der Erfindung ist es nicht nur möglich, die Verweilzeit der Absorbentien im Gasstrom zu erhöhen, sondern auch die Reaktionsgeschwindigkeit der Reagentien durch Bestrahlung zu erhöhen. Zu diesem Zweck werden elektrische Felder, insbesondere Elektrofilter oder auch Bestrahlungskammern mit großer Elektronendichte vorgeschaltet bzw. das Tuchfilter durch ein Elektrofilter ersetzt. Bei einer Vorschaltung kann man auch noch zusätzlich eine Trennung von Aschenteilchen und beladenen Absorptionsteilchen erreichen, so daß die Weiterverwendung der reinen Sulfit- und Sulfatsalze ermöglicht wird, wodurch die Menge an zu deponierendem Abfall reduziert wird.

# Patentansprüche

1) Verfahren zur Reinigung von mit Stäuben und Abgasen verunreinigten Abgasen, insbesondere Abgasen aus Verbrennungsanlagen, deren Stäube Alkali- und/oder Erdalkaliverbindungen aus der Brennkammer kommend beinhalten, bzw. deren Stäube bei der Zugabe von Alkali- und/oder Erdalkaliverbindungen, insbesondere eines oder mehrerer der folgenden: $Ca(OH)_2$, $CaCO_3$, $NaHCO_3$, $Na_2SO_4$, NaOH, CaO bzw. Hydroxide, Oxide, Karbonate, Sulfate, Bikarbonate, nach einer teilweisen Entschwefelung entstanden sind, dadurch gekennzeichnet, daß zumindest ein Teilstrom des staubhältigen Abgases im Temperaturbereich von kleiner als $500^{\circ}$ C mit $NH_3$ bzw. $NH_4OH$ oder mit Stoffen, die diese Verbindungen durch thermische Zersetzung abgeben, vorzugsweise in Abhängigkeit der Zugabe von Kalk und/oder Kohle in die Feuerung des Dampferzeugers, versetzt werden und daß das staubförmige Reaktionsprodukt mit dem restlichen Flugstaub in einem Staubabscheider vom Abgasstrom getrennt wird und daß insbesondere zur Verlängerung der Verweilzeit der Reaktionsprodukte im Abgasstrom und zur Vermeidung der Abscheidung $NH_3$ bzw. $NH_4$-hältiger Verbindungen im Trockenabscheider die Trockenabscheidung der Endprodukte in einem Tuchfilter erfolgt.

2) Verfahren nach Anspruch 1, dadurch gekennzeichnet, daß bei überstöchiometrischer Zumischung des $NH_3$ bzw. $NH_4OH$ staubförmiges Reaktionsprodukt in einem Naßfilter ausgewaschen wird, während bei einer unterstöchiometrischen Zugabe das staubförmige Reaktionsprodukt in einem Trockenabscheider vom Abgas abgeschieden wird.

3) Verfahren nach Anspruch 1, dadurch gekennzeichnet, daß dem Abgas während, vor und/oder nach der $NH_3$- bzw. $NH_4OH$-Zugabe Natriumkarbonat und/oder Natriumbikarbonat, Natriumsulfat bzw. NaOH und gegebenenfalls $Al_2O_3$ im Temperaturbereich von unter 500° C zugemischt werden, wobei insbesondere das Natriumbikarbonat bei 250° - 330° C in einem heißen Gasstrom aufgebrannt und dann dem Abgasstrom vor dem Filter im Temperaturbereich kleiner als 250° C zugemischt wird.

4) Verfahren nach Anspruch 1, dadurch gekennzeichnet, daß das $NH_3$, insbesondere in Form des Hirschhornsalzes, zur maximalen Entschwefelung im Temperaturbereich kleiner als 330° C dem Abgasstrom zugemischt wird, während zur maximalen Entstickung die Zumischung im Temperaturbereich größer als 250° C erfolgt.

5) Verfahren nach Anspruch 2, dadurch gekennzeichnet, daß zur Erhöhung der Reaktionsfähigkeit der Reaktionspartner elektrische Felder, insbesondere eines Elektrofilters, oder eine Bestrahlungskammer mit großer Elektronendichte, angewendet werden kann, in welchen auch die trockene Abscheidung erfolgt, und in welche direkt oder unmittelbar davor die Sorbentien aufgegeben werden.

6) Verfahren nach Anspruch 1, dadurch gekennzeichnet, daß dem Abgas vor, während und/oder nach der $NH_3$- bzw. $NH_4$-Verbindungszugabe Sulfite, insbesondere Natriumsulfite bzw. Hydrogensulfite und/oder andere mit dem $SO_2$ des Abgases Sulfite bildende Reduktionsmittel im Temperaturbereich von unter 500° C zugemischt werden.

7) Verfahren nach Anspruch 6, dadurch gekennzeichnet, daß dem Abgas ein Gemisch mit etwa 30 % $Na_2SO_3$ und/oder $NaHSO_3$ zugemischt wird, wobei mit geringer werdendem $SO_2$-Gehalt

des Abgases der Anteil des $Na_2SO_3$- bzw. des $NaHSO_3$-Gehaltes des Sorptionsmittels erhöht wird.

8) Verfahren nach Anspruch 3, dadurch gekennzeichnet, daß bei hohem $SO_2$-Gehalt des Abgases, insbesondere bei einem $SO_2$-$NO_x$-Verhältnis größer als 2, dem Abgas ein Gemisch von $NH_3$ bzw. $NH_3$-abgebenden Verbindungen mit $NaHCO_3$ trocken beigemischt bzw. naß bzw. in wässriger Suspension eingedüst wird.

9) Verfahren nach Anspruch 6, dadurch gekennzeichnet, daß bei einem $SO_2$-$NO_x$-Verhältnis im Abgas zwischen 1 und 2 dem Abgas ein Gemisch von $NH_3$ bzw. $NH_3$-abgebenden Verbindungen mit $NaHCO_3$ und $Na_2SO_3$ bzw. $NaHSO_3$ trocken beigemischt bzw. naß bzw. in wässriger Suspension eingedüst wird.

10) Verfahren nach Anspruch 6, dadurch gekennzeichnet, daß bei geringem $SO_2$-Gehalt des Abgases, insbesondere bei einem $SO_2$-$NO_x$-Verhältnis im Abgas kleiner als 1 dem Abgas ein Gemisch von $NH_3$ bzw. $NH_3$-abgebenden Verbindungen mit $Na_2SO_3$ bzw. $NaHSO_3$ trocken beigemischt bzw. naß bzw. in wässriger Suspension eingedüst wird.

11) Verfahren nach einem der Ansprüche 8 bis 10, dadurch gekennzeichnet, daß die Menge des eingebrachten Wassers in Abhängigkeit der Abgastemperatur, der Abgasmenge und der zur Verfügung stehenden Verdampfungszeit bis zum Filter bemessen wird, damit im nachfolgenden Filter die anfallenden ausreagierten Sorbentien praktisch trocken anfallen.

12) Verfahren nach Anspruch 1 und 3, dadurch gekennzeichnet, daß vor der $NH_3$ bzw. $NH_4OH$-Zugabe entweder das staubbeladene Abgas mit gutem Wirkungsgrad entstaubt wird und ein Teil des abgeschiedenen Staubes, insbesondere 10 % desselben, nach einer Anfeuchtung, mit den Natriumverbindungen wieder in den Abgasstrom eingebracht wird, oder mit schlechtem Wirkungsgrad, insbesondere im Bereich von 90 %, entstaubt wird.

Fig.1

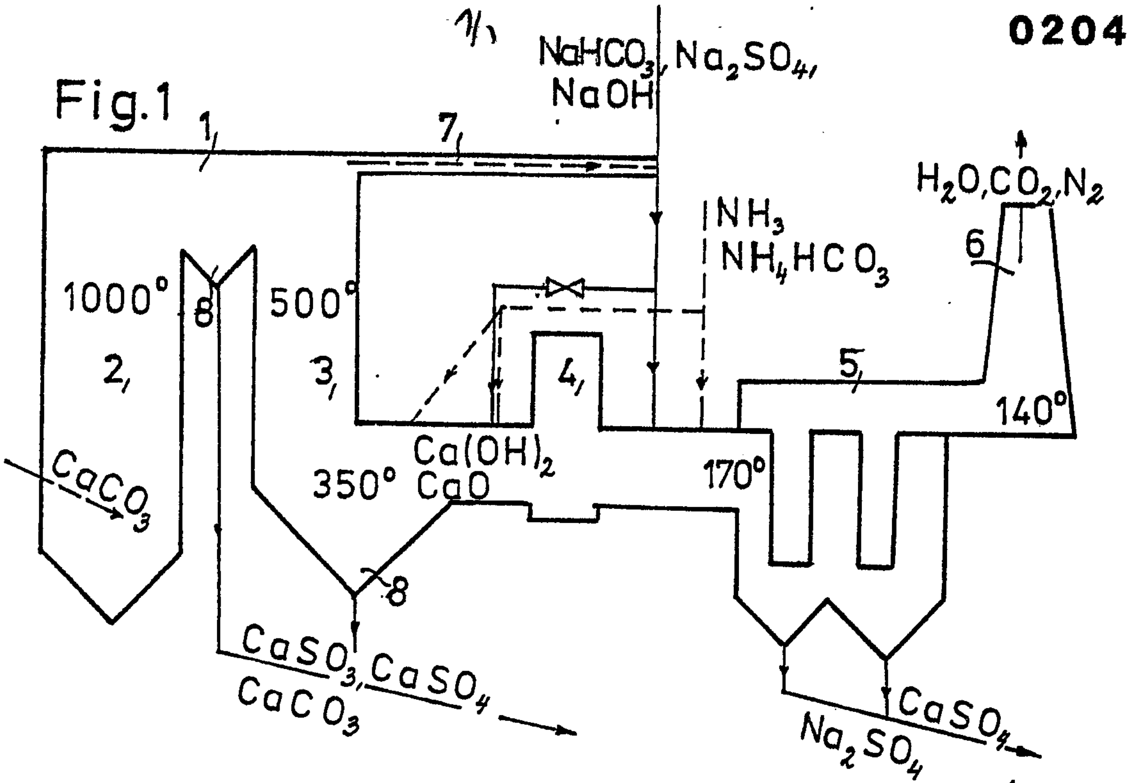
$NaHCO_3$, $Na_2SO_4$, $NaOH$
1
7
$H_2O$, $CO_2$, $N_2$
$NH_3$
$NH_4HCO_3$
6
1000°
8
500°
2
3
4
5
140°
$Ca(OH)_2$
$CaCO_3$
350° $CaO$
170°
8
$CaSO_3$, $CaSO_4$
$CaCO_3$
$CaSO_4$
$Na_2SO_4$

Fig.2

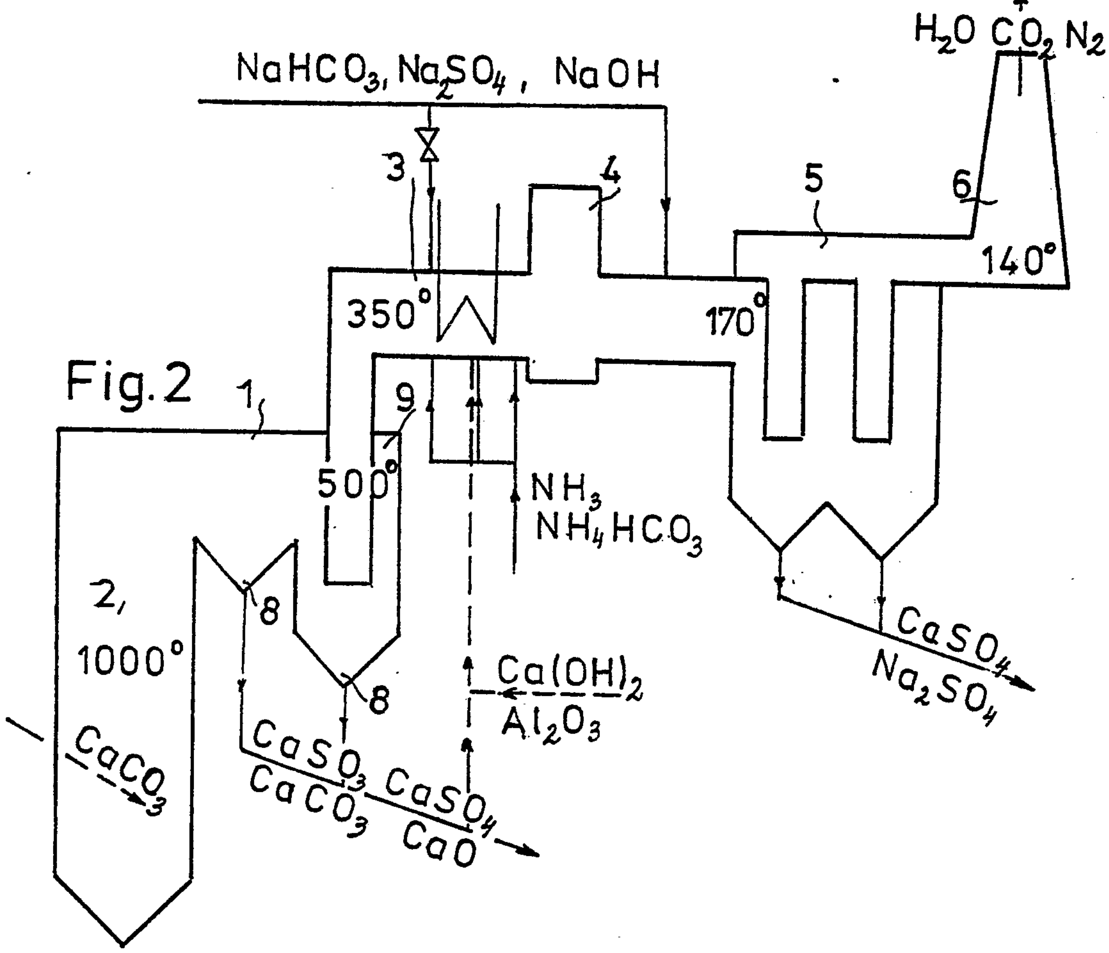
$H_2O$ $CO_2$ $N_2$
$NaHCO_3$, $Na_2SO_4$, $NaOH$
3
4
5
6
140°
350°
170°
1
9
500°
$NH_3$
$NH_4HCO_3$
2
8
1000°
$CaSO_4$
$Na_2SO_4$
$Ca(OH)_2$
$Al_2O_3$
8
$CaCO_3$
$CaSO_3$ $CaSO_4$
$CaCO_3$
$CaO$